# FASCICULE DE BREVET EUROPEEN

(11) **EP 0 685 710 B1**
(45) Date de publication et mention de la délivrance du brevet: **20.12.2000**
(21) Numéro de dépôt: 95400789.4
(22) Date de dépôt: 07.04.1995
(51) Int. Cl.: G01D 11/26, G01F 15/14

(54) **Dispositif anti-buée pour compteur de liquide à totalisateur**
Anti-Beschlagvorrichtung für Flüssigkeitstotalmengenzähler
Anti-fog device for totalizing liquid flowmeter

(30) Priorité: 31.05.1994 FR 9406609
(43) Date de publication de la demande: 06.12.1995
(73) Titulaire: SAPPEL, 68304 Saint-Louis Cédex (FR)
(72) Inventeur: Roy, Daniel c/o Cabinet Ballot Schmit, F-75116 Paris (FR)
(74) Mandataire: Schmit, Christian Norbert Marie

(56) Documents cités:
- EP-A- 0 575 212
- AU-B- 33 496
- DE-A- 2 726 851

## Description

La présente invention a trait au domaine des compteurs de liquide et plus particulièrement au domaine des compteurs d'eau.

On connaît différents types de compteurs d'eau. Parmi ceux-ci, les compteurs volumétriques d'eau à piston oscillant sont réputés pour leurs hautes performances métrologiques.

Ces compteurs se branchent en série le long d'une branche d'un réseau de distribution des eaux. Aussi, lorsqu'un abonné du service des eaux puise de l'eau dans le réseau, cette eau est préalablement admise dans le compteur où elle est comptée avant sa distribution.

Tels qu'ils sont réalisés actuellement, les compteurs d'eau comportent une entrée de l'eau à compter, un mécanisme de comptage comprenant un piston oscillant ou une turbine, un boîtier totalisateur, et une sortie de l'eau comptée.

Le boîtier totalisateur comprend une capsule qui renferme un cylindre de comptage dont l'une des génératrices affleure au niveau de la surface d'un cadran de lecture de ladite capsule. Ce cylindre fournit à l'abonné ou à un contrôleur du service des eaux, une indication sur la quantité d'eau consommée.

Cette indication est visible au travers d'une fenêtre de lecture située à distance au dessus du cadran.

Les compteurs sont placés à proximité du lieu où s'effectue le puisage, dans des endroits humides qui ne sont pas chauffés tels que, par exemple, une cave ou à l'extérieur de la demeure de l'abonné, le plus souvent dans une fosse enterrée.

Aussi, quand la température du milieu extérieur chute, le froid pénètre dans le compteur et refroidit l'air contenu dans la capsule du totalisateur. Ce refroidissement est graduel de l'extérieur de la capsule vers l'intérieur.

Dès que la température de l'air contenu dans la capsule atteint la température de rosée de l'eau, la vapeur d'eau contenue dans cet air se condense et forme de fines gouttelettes de buée sur la fenêtre de lecture de la capsule.

La lecture des indications de comptage devient alors problématique voire impossible. En effet, on ne peut essuyer cette buée car la capsule est close, notamment pour des raisons de sûreté vis-à-vis du comptage.

La présente invention a pour but de proposer un dispositif qui pallie à moindre coût les inconvénients précités et qui permette notamment la lecture des indications de comptage dans des conditions propices à la formation de buée dans une capsule de compteurs.

Ce but, ainsi que d'autres qui apparaîtront par la suite, sont atteints grâce à la présence d'une proéminence de la fenêtre de lecture dirigée vers l'indication de comptage.

L'invention a donc pour objet un dispositif anti-buée pour compteur destiné à être relié à un réseau de distribution d'un liquide, comprenant d'une part, un mécanisme de mesure d'un des paramètres caractérisant ce liquide et, d'autre part un cadran de lecture laissant apparaître une indication de comptage visible au travers d'une fenêtre de lecture située à distance au dessus dudit cadran et présentant une face supérieure et une face inférieure, caractérisé en ce que ladite fenêtre comporte, sur sa face inférieure et au dessus de ladite indication de comptage, une proéminence.

La description qui va suivre, et qui ne présente aucun caractère limitatif, permettra de mieux comprendre la manière dont l'invention peut être mise en pratique, ainsi que son mode de fonctionnement.

Elle doit être lue au regard des dessins annexés, dans lesquels :
- la figure 1 illustre, en perspective, un compteur muni d'un dispositif anti-buée de l'invention placé dans des conditions de température telles que la capsule ne comporte pas de buée ;
- la figure 2 illustre, en perspective, un compteur muni d'un dispositif anti-buée de l'invention, placé dans des conditions de température telles que la capsule comporte de la buée ; et
- la figure 3 présente, en coupe transversale, une capsule de totalisateur muni d'un dispositif anti-buée de l'invention.

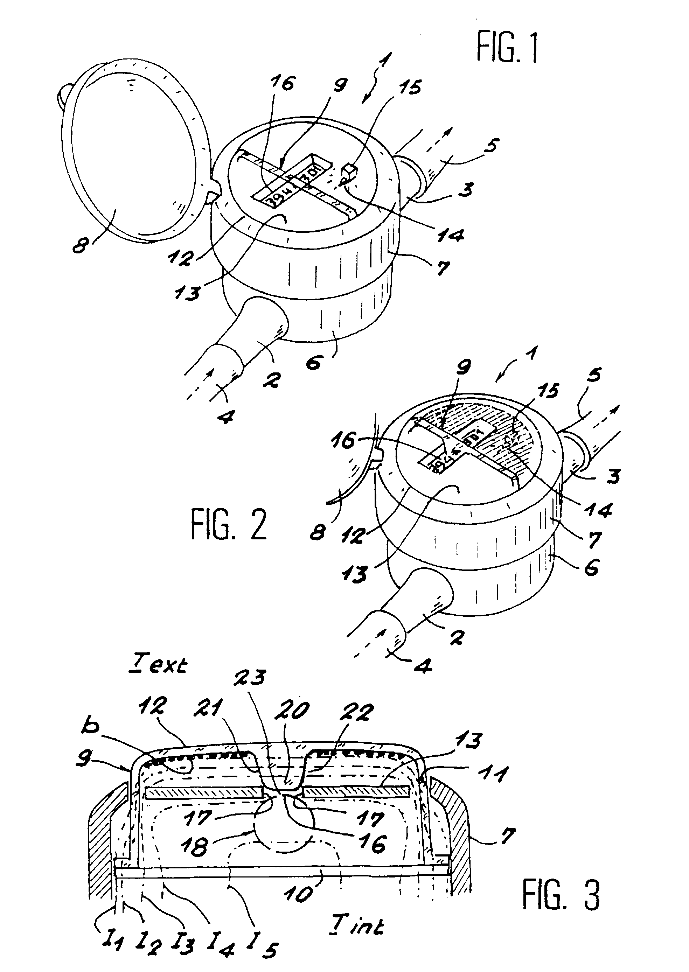

Les figures 1 et 2 illustrent un compteur d'eau à piston oscillant ou à turbine référencé 1 dans son ensemble.

Ce compteur est destiné à être relié à un réseau de distribution d'eau. Aussi, il comporte un tube d'admission de l'eau à compter 2 et un tube d'échappement de l'eau comptée 3. Le tube d'admission 1 est relié à une canalisation d'arrivée de l'eau à compter 4 et le tube d'échappement 3 est relié à une canalisation de départ de l'eau comptée 5, lesdites canalisations 4, 5 faisant partie du réseau précité.

Il comporte une partie inférieure 6 dans laquelle se trouve un mécanisme de mesure, et une partie supérieure formant un boîtier totalisateur 7 muni d'un couvercle 8.

Le mécanisme de mesure est constitué, dans le cas particulier des compteurs volumétriques de l'exemple de la présente description, d'un piston oscillant enfermé dans une chambre de comptage. Ce mécanisme permet de mesurer un paramètre caractérisant ce liquide : le volume d'eau écoulé.

Le boîtier totalisateur 7 comporte une capsule sensiblement cylindrique 9.

Si l'on se rapporte maintenant à la figure 3, il apparaît que la capsule 9 est formée d'une paroi plane inférieure 10 hermétiquement soudée, par exemple, par l'intermédiaire d'ultrasons, à un couvercle globulaire 11 dont le dessus, sensiblement plan et parallèle à la paroi 10, forme une fenêtre de lecture transparente 12. Cette fenêtre 12 est par exemple constituée de plastique. Elle est située, au dessus d'un cadran de lecture 13 compris dans la capsule 9, à distance de celui-ci.

Le cadran de lecture 13 présente, à sa surface, apparentes au travers de la fenêtre 12, des indications de comptage. L'une de ces indications est constituée d'une aiguille 14 munie d'un aimant cubique 15. Une autre de ces indications est constituée d'un ensemble de sept ou huit chiffres 16 présentés côte à côte et montrés au travers d'une ouverture longitudinale 17 du cadran 13. Ces chiffres appartiennent à un rouleau de comptage 18 situé dans la capsule 9, au dessous du cadran 13.

Selon l'invention, la fenêtre 12 comporte une proéminence 20 située sur sa face inférieure, directement au dessus d'une indication de comptage 16.

Au regard de cette proéminence 20, la face supérieure de la fenêtre 12 est sensiblement plane.

La proéminence 23 de l'invention est relativement limitée par rapport à la surface totale de la fenêtre de lecture. Elle forme un relief comportant deux faces en dépouille 21, 22 et, en son extrémité inférieure, un plan 23. En coupe transversale, ce relief présente un profil sensiblement en U, l'extrémité inférieure dudit U étant formée par le plan 23 vu en coupe, et les côtés verticaux dudit U étant formés par les faces en dépouilles 21, 22 vues en coupe. La distance entre les faces en dépouilles 21, 22 est de l'ordre de grandeur de la hauteur de la proéminence 20. Bien entendu, d'autres modes de réalisation de l'invention sont envisageables. Par exemple, la proéminence 20 peut montrer un profil globulaire ne présentant, de ce fait, pas de plan inférieur 23 mais une partie basse courbe. Un tel profil, convenablement adapté, peut conférer au dispositif de l'invention un effet de loupe qui facilitera la lecture chez l'utilisateur.

La distance entre l'extrémité inférieure 23 de la proéminence 20 et l'indication de comptage 16 est de l'ordre de 3 mm. Comme la distance entre la face inférieure de la fenêtre 12 et le cadran de lecture 13 est supérieure à environ 8 mm, la hauteur de la proéminence 20 est supérieure à environ 5 mm.

Lorsque la température extérieure au compteur diminue jusqu'à une température T_{ext.} inférieure à la température moyenne T_{int.} de l'air contenu dans la capsule 9, le froid pénètre dans ladite capsule 9, en particulier, par la fenêtre 12. La température de l'air contenu dans la capsule 9 s'abaisse alors graduellement d'abord à la périphérie, et notamment à proximité de la fenêtre 12, puis au coeur de la capsule 9. A un moment donné, la température de la capsule 9 se répartit en couches représentées en figure 3 par les isothermes I₁, I₂, I₃, I₄, I₅, dont les températures sont croissantes de T_{ext.} à T_{int.}. Dans un exemple, si T_{ext.}= 8°C, la température à l'intérieur de la capsule 9 peut descendre, au voisinage de I₁, jusqu'à 8°C et être à l'origine de la formation de buée sur la fenêtre 12, ainsi que cela est représenté aux figures 2 et 3. Toutefois, puisque la température des isothermes coupant la proéminence 20 reste supérieure à 8°C, celle-ci ne se recouvrira pas de buée et l'indication de comptage 16 restera visible.

Dès que la température de l'intérieur de la capsule 9 tombe au dessous de la température de rosée de l'eau, de la buée se forme sur la face inférieure de la fenêtre de lecture 12. Toutefois, il suffit que l'un des isothermes coupant la proéminence 20 ait une température supérieure à la température de rosée de l'eau pour que la vapeur d'eau ne se condense pas sur la partie inférieure de cette proéminence 20 alors sensiblement exempte de buée. De plus, si la température continue à descendre, toute l'eau contenue dans la capsule est déjà condensée sur la fenêtre 12. De ce fait, la proéminence 20 restera sèche même lorsqu'elle atteindra à son tour la température de condensation.

La lisibilité des chiffres de l'indication de comptage est ainsi assurée.

## Revendications

1. Dispositif anti-buée pour compteur destiné à être relié à un réseau de distribution d'un liquide, comprenant d'une part, un mécanisme de mesure d'un des paramètres caractérisant ce liquide et, d'autre part un cadran de lecture (13) laissant apparaître une indication de comptage (16) visible au travers d'une fenêtre de lecture (12) située à distance au dessus dudit cadran (13) et présentant une face supérieure et une face inférieure, caractérisé en ce que ladite fenêtre (12) comporte, sur sa face inférieure et au dessus de ladite indication de comptage (16), une proéminence (20).

2. Dispositif selon la revendication 1, caractérisé en ce que la proéminence (20) est relativement limitée par rapport à la surface totale de la fenêtre de lecture (12).

3. Dispositif selon l'une des revendications 1 ou 2, caractérisé en ce que la face supérieure de la fenêtre (12) est située au regard de la proéminence (20) est sensiblement plane.

4. Dispositif selon l'une des revendications précédentes, caractérisé en ce que la proéminence (19) forme un relief comportant deux faces en dépouille (21, 22) et, en son extrémité inférieure, un plan (23), ledit relief présentant, en coupe transversale, un profil sensiblement en U.

5. Dispositif selon l'une des revendications précédentes, caractérisé en ce que la hauteur de la proéminence (20) est supérieure à environ 5 mm.

6. Dispositif selon la revendication 5, caractérisé en ce que l'indication de comptage (16) est disposée au dessous du cadran (13).

7. Dispositif selon l'une des revendications précédentes, caractérisé en ce que la distance entre l'extrémité inférieure de la proéminence (20) et l'indication de comptage (16) est de l'ordre de 3 mm.

8. Dispositif selon l'une des revendications précédentes, caractérisé en ce que la distance entre la face inférieure de la fenêtre et le cadran de lecture (13) est supérieure à environ 8 mm.

## Claims

1. An anti-fog device for a counter adapted to be connected to a distribution network for a liquid, comprising, firstly, a mechanism for measuring one of the parameters characterising the said liquid, and secondly, a reading dial (13) for displaying a count indication (16) visible through a reading window (12), which is located at a distance above the said dial (13) and which has an upper face and a lower face, characterised in that the said window (12) has a projecting element (20) on its lower face and above the said count indication (16).

2. A device according to Claim 1, characterised in that the projecting element (20) is relatively limited by comparison with the total surface area of the reading window (12).

3. A device according to Claim 1 or Claim 2, characterised in that the upper face of the window (12) situated facing the projecting element (20) is substantially flat.

4. A device according to one of the preceding Claims, characterised in that the projecting element (20) constitutes a relief having two skew faces (21, 22), and, at its lower end, a flat (23), with the said relief having a substantially U-shaped profile in transverse cross section.

5. A device according to one of the preceding Claims, characterised in that the height of the projecting element (20) is greater than about 5 mm.

6. A device according to Claim 5, characterised in that the count indication (16) is disposed below the dial (13).

7. A device according to one of the preceding Claims, characterised in that the distance between the lower end of the projecting element (20) and the count indication (16) is of the order of 3 mm.

8. A device according to one of the preceding Claims, characterised in that the distance between the lower face of the window and the reading dial (13) is greater than about 8 mm.

## Patentansprüche

1. Antibeschlagsvorrichtung für einen Zähler, der mit einem Flüssigkeits-Verteilernetz verbunden werden soll und einerseits eine Meßeinrichtung für einen der diese Flüssigkeit kennzeichnenden Parameter und andererseits eine Ableseskala (13) aufweist, die eine Zählangabe (16) anzeigt, die durch ein Ablesefenster (12) sichtbar ist, das in Abstand oberhalb der Skala (13) angeordnet ist und eine Oberseite und eine Unterseite besitzt, dadurch gekennzeichnet, daß das Fenster (12) auf seiner Unterseite und oberhalb der Zählangabe (16) einen Vorsprung (20) aufweist.

2. Vorrichtung nach Anspruch 1, dadurch gekennzeichnet, daß der Vorsprung (20) in Bezug auf die gesamte Oberfläche des Ablesefensters (12) relativ begrenzt ist.

3. Vorrichtung nach einem der Ansprüche 1 oder 2, dadurch gekennzeichnet, daß die Oberseite des Fensters (12), die sich gegenüber dem Vorsprung (20) befindet, im wesentlichen eben ist.

4. Vorrichtung nach einem der vorhergehenden Ansprüche, dadurch gekennzeichnet, daß der Vorsprung (20) ein Relief bildet, das zwei schräge Flächen (21, 22) und an seinem unteren Ende eine ebene Fläche (23) aufweist, wobei dieses Relief im Querschnitt ein im wesentlichen U-förmiges Profil besitzt.

5. Vorrichtung nach einem der vorhergehenden Ansprüche, dadurch gekennzeichnet, daß die Höhe des Vorsprungs (20) mehr als etwa 5 mm beträgt.

6. Vorrichtung nach Anspruch 5, dadurch gekennzeichnet, daß die Zählanzeige (16) unterhalb der Skala (13) angeordnet ist.

7. Vorrichtung nach einem der vorhergehenden Ansprüche, dadurch gekennzeichnet, daß der Abstand zwischen dem unteren Ende des Vorsprungs (20) und der Zählanzeige (16) etwa 3 mm beträgt.

8. Vorrichtung nach einem der vorhergehenden Ansprüche, dadurch gekennzeichnet, daß der Abstand zwischen der Unterseite des Fensters und der Ableseskala (13) mehr als etwa 8 mm beträgt.
